# EUROPEAN PATENT SPECIFICATION

(11) **EP 1 389 422 B1**
(45) Date of publication and mention of the grant of the patent: **11.01.2006**
(21) Application number: 02388053.7
(22) Date of filing: 16.08.2002
(51) Int. Cl.: A01L 1/04, A01L 7/02

(54) **An improved horseshoe with a resilient intermediate layer and a method of manufacturing such a horseshoe**
Verbesserter Hufschuh mit elastischer Zwischenschicht und Verfahren zu dessen Herstellung
Fer à cheval avec une couche élastique intermédiaire et méthode pour sa production

(43) Date of publication of application: 18.02.2004
(73) Proprietor: Triple International APS, 2930 Klampenborg (DK)
(72) Inventor: Moller, Helge, 2920 Charlottenlund (DK); Moesgaard, Anders, 2930 Klampenborg (DK)
(74) Representative: Olsen, Lau Lund

(56) References cited:
- US-A- 649 231

## Description

The present invention relates to a horseshoe with a resilient intermediate layer positioned to completely fill out the interspace between a rigid upper part having an upper surface for abutment against the lower side of the hoof of the horse and a rigid lower part extending at least under a part of the upper part, the upper part and the lower part being in mechanical connection with each other at the front edge of the horseshoe, interlocking means being provided near at least one of the rear edges of the branches of the lower part for interconnection of the lower part and the upper part to prevent separation of the upper and lower parts, while allowing elastic deformation of the resilient intermediate layer.

Horseshoes of the type with two parts and a resilient intermediate layer therebetween are well known in the art. This type of horseshoe is used substantially as horseshoes for horses at races and shows as to shock-absorb the impact between the horseshoe and the substratum.

Prior art two-part horseshoes in general comprise a hoof contacting plate, a ground contacting plate and an elastic layer interposed between the plates. The ground contacting plate and, possibly, the elastic layer are provided with holes large enough for the head of a nail to be inserted there through while the hoof contacting plate is provided with smaller holes, so the nail abuts the hoof contacting layer or the interposed elastic layer.

WO99/65298 discloses a shock-absorbing horseshoe of the type defined in the opening paragraph in which a resilient intermediate layer completely fills out the interspace between the upper part and the lower part, the lower part being shorter than the upper part. Said intermediate layer is secured to the two parts by the adhering of the resilient material used for said layer. The securing of the horseshoe to the hoof by means of conventional nails is accomplished solely by the abutment of the nail heads against the resilient intermediate layer. The two parts of the horseshoe is kept together by a combination of a rigid mechanical connection solely at the front of the horseshoe and the adhering force from the resilient intermediate layer.

DK-C-19298 discloses a horseshoe in which the back edges of the upper part of the two-part horseshoe are connected to the back edges of the lower part using bolts. The bolt includes a head extending outside the horseshoe functioning as a take-off, the bolt having a thread in the lower part. The bolt passes through a knob of resilient material between the two parts and into a hole inside the upper part without being connected to this latter part. As the bolt has no mechanical connection with the upper part it may freely pass up and down inside the hole in the upper part.

Whereas the construction of these aforementioned two prior art horseshoes is such as to provide a shock-absorbing effect, they both have the disadvantage of solely securing the lower part to the upper part by the mechanical connection at the front edge of the horseshoe, and in the case of the horseshoe disclosed in WO99/65298, partly by the adhering of the resilient intermediate layer along the upper and lower parts. The front edge of the horseshoe is subjected to wear due to the deflection of the two parts, and this may entail the destruction of the horseshoe by breaking up into parts.

This breaking up is even more pronounced when a soft and thus more comfortable intermediate layer material is used, because the more soft a material the more the rigid mechanical connection at the front of the horseshoe is subjected to stresses. This induces material fatigue in that part of the horseshoe and finally the lower part of the horseshoe may break off.

Providing a further means of keeping the two parts together may entail a problem. In DK-19284 and in US-918094 this problem is evident. US-918094 describes a horseshoe made from a lower part in one piece provided with detachable plates and rubber in between near the rear ends of the horseshoe. The plates and rubber is held in place with lugs and openings in the lower part and the plates. In one embodiment the plates and rubber is further secured with a screw with a head going through each plate, and into the single part, being secured there with a thread. The problem here consists in that during use of the horseshoe, there is a strong possibility that, in the case of US-918094, the heads of the screws or in the case of DK-19284, the bolts, will enter into the hoof of the horse. This may in turn cause pain to the horse.

US 649,231 discloses a two-part horseshoe with a resilient intermediate layer, an upper and a lower part at their rear ends being interconnected by means of a stud in rigid connection with the upper part and in loose connection with the lower part.

In view of the problems with the prior art, the object of the invention is to further improve the integrity of a horseshoe of the type stated in the introductory paragraph and in doing so preventing discomfort to the horse.

To meet these objects, according to a first aspect of the present invention there is provided an improved horseshoe as described in the introductory paragraph, characterized in that said interlocking means (A: A1; A2) is loosely connected with the upper part (2) and rigidly connected with the lower part (3), an upper surface of said interlocking means (A; A1, A2) being retracted from said upper surface of the upper part (2) to provide a volume (v) between said upper surfaces with the upper part positioned in said abutment against the hoof.

In addition to the provision of a simple construction enabling manufacture at a competitive price together with improved dampening at impact of the horse hoof against the substratum, a stable connection with the substratum at take-off of the hoof and safe securing of the horseshoe to the hoof without any risk that the individual parts of the horseshoe will fall apart during use as well as the advantageousinterlocking of the two parts which are thus prevented from falling apart,this solution provides the advantages that, firstly, the interlocking means does not prevent the resilient compression of the intermediate layer between the two parts during use and, secondly, the interlocking means is held securely inside the horseshoe by the rigid mechanical connection to the lower part. Moreover, by the retraction of an upper surface of the interlocking means from an upper surface of the upper part to provide a volume between said upper surfaces possible movement of the interlocking means resulting from compression of the intermediate layer will not cause painful or damaging penetration of the interlocking means into the hoof.

In one embodiment the interlocking means extends through a hole formed in the upper part. In another, preferredembodimentthe volume between the upper surfaces of the interlocking means and the upper part is filled out with resilient material.

Thereby, a "cushion" is provided in this volume or space thus formed between the head of the interlocking means and the hoof of the horse. When the intermediate resilient layer is compressed during use, and the head accordingly is pressed upwards towards the underside of the hoof this embodiment makes a further contribution to prevent the head of the interlocking means from penetrating into the hoof of the horse.

In one embodiment, said resilient material is the same as the material constituting the resilient intermediate layer.

This embodiment has the advantage of providing the possibility to form the resilient layer and the material inside said volume in a process, e.g. the same process.

In one embodiment, the resilient intermediate layer consists of a moulded resilient plastic material, preferably polyurethane.

Resilient plastics and rubbers have good working properties and may by moulding be brought to adhere well to the surfaces of the upper and lower parts. Polyurethane (P) has in particular turned out to be a suitable material as it in tests has proven to be a well performing resilient and durable material.

In one embodiment, the interlocking means comprises a rivet- or screw-like member, which is rigidly secured in the lower part and has a substantially flat head adapted to be positioned in said hole.

The advantage is to keep the production costs low when manufacturing the horseshoe by using a low-cost and simple interlocking means.

According to a second aspect of the present invention, there is provided a method for the manufacture of the horseshoe according to the invention comprising to cut or punch the upper part and the lower part from sheet material, preferably steel sheet. Then said upper and lower parts are arranged to extend substantially parallel to each other with an interspace therebetween. The next step is to embed resilient material for constituting said resilient intermediate layer directly into the interspace between the upper part and the lower part. Then the upper and lower parts are interconnected by arranging interlocking means near at least one of the rear edges of the branches of the lower part to prevent separation of the upper and lower parts, while allowing elastic deformation of the resilient intermediate layer. According to the invention this method is characterized by providing at least one hole in the upper part at a position which corresponds to a position near the rear edges of the branches of the lower part; arranging said interlocking means in this hole with an upper surface of the interlocking means retracted from an upper surface of the upper part to provide a volume between said upper surfaces; embedding said resilient material to fill out said volume; and connecting said interlocking means loosely with the upper part and rigidly with the lower part..

The upper part and the lower part may be made from any suitable material having the required rigidity and wearability, but typically a metal with good wearability and good working properties like for instance steel is chosen.

The invention will now be explained in detail in the following with reference to the schematic drawing, in which
Fig. 1 is a top plan view of one embodiment of a horseshoe according to the invention,
Fig. 2 is a partly sectional view along the line II - II in Fig. 1,
Fig. 3 shows an example of a core element to provide nail holes for the horseshoe,
Fig. 4 is a top view of the core element in Fig. 3,
Fig. 5 is a sectional view along the line V-V in Fig. 4, and
Fig. 6 is a sectional view along the line VI-VI in Fig. 1.

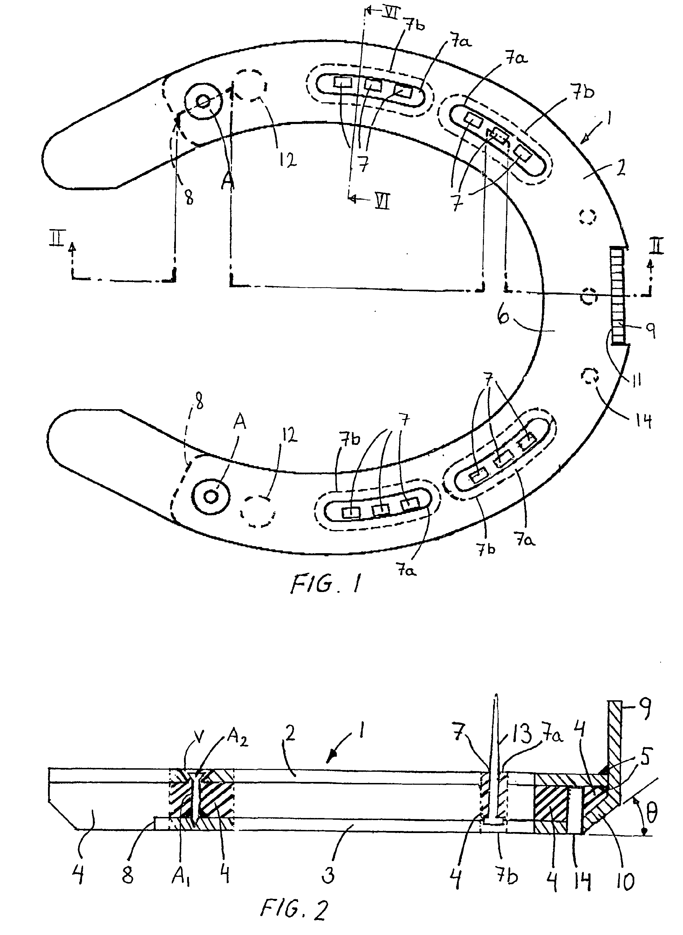

The horseshoe 1 in Fig. 1 is shaped in the usual manner according to the hoof of the horse with a front portion coherent with two backwards-facing branches. In the horseshoe 1, nail holes 7 are provided such that the horseshoe may be nailed to the lower side of the hoof of the horse by means of usual horseshoe nails 13. In the backwards facing branches of the horseshoe threaded holes 12 may be provided in the horseshoe 1 for the screwing in of a modax to enable the horse to stand firm on a slippery or loose substratum such as ice or snow or in connection with riding in rough terrain.

As shown in Fig. 2, the horseshoe 1 comprises a rigid upper part 2 for abutment on the lower side of the hoof of the horse, a rigid lower part 3 for contacting the substratum and an intermediate layer 4 consisting of a shock-absorbing resilient material between the upper part 2 and the lower part 3. By the term "rigid" is to be understood a material property in the form of a high E-module relative to the shock-absorbing material in the intermediate layer 4, which typically has a comparatively low E-module. The shock-absorbing intermediate layer 4 fills out the entire intermediate space between the substantially parallel upper and lower parts, 2, 3. The intermediate layer 4 comprises the nail holes 7 inside elongated holes 7a, 7b in the upper and lower part 2, 3, respectively.

The upper and lower parts 2, 3 may be made from plane steel sheets. In fig. 2 the thickness of said two parts are substantially equal to each other, but they may of course be of different thickness. The lower part 3 is at the front portion 6 of the horseshoe 1 provided with a toe clip 9 serving as abutment for the front edge of the hoof and having the shape of an extension coherent with the lower part 3, said extension being bent upwards from the lower part 3. At the front portion 6 an area 10 of the lower part is furthermore bent upwards under an angle θ with the lower side of the lower part 3, said angle for example being in the area of 15-20°, for the provision of a take-off roller surface for the horseshoe 1. Holes may be prepared at or on the oblique take-off roller surface 10 for receiving specially-designed, preferably hardened pins 14 with a substantially flat head in view of increasing wearability and thereby providing the possibility of use of the horseshoe 1 on a hard substratum like asphalt. The wearability of the horseshoe 1 is increased by the pin(s) 14 advantageously distributing the shock experienced by the rigid mechanical connection at the front at the time of impact with the stratum. The hardened pins 14 are preferably attached to the lower part 3 by the provision of a hole in the lower part and a pin 14, where the hole and the pin have such diameters that the pin may be pressed into the hole and retained by friction alone. The pins 14 may also be provided without hardening; then the pins may be attached to the lower part through a screw fit, welding or the like.

A recess 11 is provided in the upper part 2 at the front portion 6, in which the upwards bent toe clip 9 is received. In this manner a mechanical connection may be provided between the upper part 2 and the lower part 3, and it may be stiffened to a rigid mechanical connection by providing welds 5 in the transverse direction of the horseshoe in the recess 11.

The connection at the front edge of the front portion 6 has a hinge function such that the upper part 2 and the lower part 3 at the backwards facing branches of the horseshoe 1 may comparatively easily be moved towards each other or away from each other under elastic deformation of the intermediate layer 4. In the case a rigid mechanical connection for example like a welding 5 is provided at the front portion 6, the rigid connection does not hamper the shock-absorption owing to the resilience of the steel at this connection.

As shown in Fig. 2 the backwards facing branches of the lower part 3 are somewhat shorter than the backwards facing branches of the upper part 2, such that the rear edges of the lower part 3 are positioned somewhat ahead of the rear edges of the upper part 2. By extending the intermediate layer 4 to the rear edges of the backwards facing branches of the upper part 2, an optimal shock-absorbing effect with a particularly gentle touch is obtained in the rear part of the horseshoe which is the part of the horseshoe first hitting the substratum.

As shown in Fig. 2, the embodiment includes interlocking means A provided inside holes in the upper part 2. The holes are preferably positioned as near the two edges 8 of the backwards facing branches of the lower part 3 of the horseshoe as possible, depending on the type of material used for the lower part, the width and the thickness of the lower part at this place. However, the interlocking means A may also be placed further towards the front portion 6 of the horseshoe, i.e. closer to the nails 13 in the horseshoe.

The embodiment shown on the drawing is provided with an interlocking means A being preferably a countersunk rivet-like member A1 with a substantially flat head A2, and a hole in the upper part 2 for the interlocking means A, the hole preferably formed with a chamfer, such that largest diameter of the head A2 of the rivet-like member A1 substantially is larger than the lower part of the hole. The other end of the rivet A1 is rigidly connected to the lower part 3 e.g. by welding or by closing the rivet. As mentioned in the foregoing, the interlocking means could as an alternative to the rivet-like member A1 comprise a screw-like member secured in a threaded bore in the lower part 3.

The hole in the upper part 2 of Fig. 2 to accommodate the rivet-like member A1 is additionally formed in such a way as to provide a volume or space v between the head A2 of the rivet-like member A1 and both the plane of upper surface of the upper part 2 of the horseshoe 1 and the chamfered surface in the hole. This volume is, preferably, filled with resilient material, creating a "cushion" in this volume v.

The nail holes 7 are provided in the intermediate layer 4 and are accessible through elongated holes 7a in the upper part 2 and elongated holes 7b in the lower part 3, respectively. The elongated holes 7a, 7b, as shown in Fig. 1, and in Fig. 2 with respect of a single one of the nail holes 7, are in this embodiment made with a size accommodating three nail holes 7 in the intermediate layer. The elongated holes 7b in the lower part 3 is of a size allowing the nail heads to pass for abutment on and local resilient compression of the shock-absorbing intermediate layer 4. At the nailing of the horseshoe 1 in the hoof of a horse, a nail 13 will, when driven in, resiliently compress the shock-absorbing layer 4. When the horseshoe 1 is subsequently subjected to weight, it will be possible for the lower part 3 to be pressed against the upper part 2, without influencing the securing of the upper part to the hoof. This is due to the fact the resiliency of the intermediate layer in which the nails 13 are provided substantially "cushions" the nails and substantially are not affected by the movement of the lower part 3.

By the manufacture of the horseshoe 1 according to the invention the upper part 2 and the lower part 3 are first punched or cut from sheet material, preferably steel sheet, either as two separate parts or one coherent part, providing the necessary holes in the parts 2, 3 for example for the nails 13, the interlocking means A, the modax etc.

By separate punching of the parts 2, 3 in the embodiment shown in Figs 1 and 2, a bending up is then carried out of the take-off roller surface 10 and the toe clip 9 from the lower part 3. If in this connection, as shown in Figs 1 and 2, a rigid mechanical connection is desired between the upper part 2 and the lower part 3, said connection is made subsequently, for example by a welding operation. During this step of the method, the upper and lower parts 2,3 are arranged to extend substantially parallel to each other with an interspace therebetween. Inside the interspace, the intermediate layer 4 is made by embedding a shock-absorbing resilient material, preferably polyurethane, directly therein.

Preferably, the interlocking means A are provided before the intermediate layer 4 is embedded between the upper and lower parts 2, 3. This is advantageous, since this stabilizes the arrangement during the embedding. The interlocking means A may alternatively be provided after the embedding has taken place.

By this moulding operation, the parts 2, 3, preferably including the interlocking means, are placed in a mould having room for simultaneous moulding of the extensions of the intermediate layer 4 beyond the rear edges of the backwards facing branches of the lower part 3. In the nail holes 7 with associated countersinking in the intermediate layer 4, suitable core elements 30 are used during the moulding.

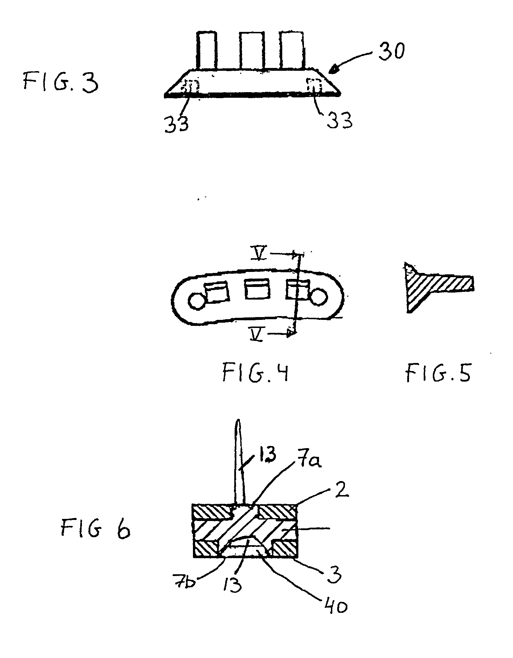

Figs. 3 to 5 show schematic views of an example of a core element 30 to provide in this case three nail holes 7 with countersinking in the horseshoe 1. Before moulding begins, the necessary number of core elements 30 are inserted, such that the under surface of the core element is at the same level as the plane of the under surface of the lower part 3. Moulding of the resilient material is performed after all core elements have been inserted. Holes 33 may be provided in the core element to facilitate removal of the core element after moulding. After removal, it now possible to insert the required number of horseshoe nails 13 in thus pre-shaped nail holes 7 inside the intermediate layer 4. Thus, when subsequently looking at the under side of the horseshoe 1, the heads of the three nails 13 will be seen protruding from the resilient material inside the larger elongated hole 7b in the lower part 3.

Fig. 6 is a sectional view through the horseshoe 1 between two nails 13, showing the upper and lower part 2, 3, the intermediate layer 4, and a nail 13. As it may be seen from the figure, the countersinking in the intermediate layer 4 resulting from the core element 30 form a through-shaped cavity 40 in said intermediate layer 4, leaving a free space between the nail heads. In another embodiment, the nail holes 7 in the intermediate layer may, by means of a corresponding core element, also be formed without leaving said free space between the nail heads.

In a particularly advantageous embodiment of the invention the abovementioned volume v is filled out with the same resilient material as is used for the intermediate layer 4. The two moulding operations may preferably be performed in one and the same operation, or they may alternatively be performed separately.

## Claims

1. A horseshoe (1) with a resilient intermediate layer (4) positioned to completely fill out the interspace between a rigid upper part (2) having an upper surface for abutment against the lower side of the hoof of the horse and a rigid lower part (3) extending at least under a part of the upper part (2), the upper part (2) and the lower part (3) being in mechanical connection with each other at the front edge of the horseshoe, interlocking means (A; A1, A2) being provided near at least one of the rear edges of the branches of the lower part (3) for interconnection of the lower part (3) and the upper part (2) to prevent separation of the upper and lower parts, while allowing elastic deformation of the resilient intermediate layer (4), **characterized in that** said interlocking means (A: A1; A2) is loosely connected with the upper part (2) and rigidly connected with the lower part (3), an upper surface of said interlocking means (A; A1, A2) being retracted from said upper surface of the upper part (2) to provide a volume (v) between said upper surfaces with the upper part positioned in said abutment against the hoof.

2. A horseshoe (1) according to claim 1, **characterized in that** said interlocking means (A; A1, A2) extends through a hole formed in the upper part (2).

3. A horseshoe (1) according to claim1 or 2, **characterized in that** said volume (v) is filled out with resilient material.

4. A horseshoe (1) according to claim 3, **characterized in that** the resilient material is the same as the material constituting the resilient intermediate layer (4).

5. A horseshoe (1) according to any of the preceding claims, **characterized in that** the resilient intermediate layer (4) consists of a moulded resilient plastic material, preferably polyurethane.

6. A horseshoe (1) according to claim 2, **characterized in that** the interlocking means (A) comprises a rivet- or screw-like member (A1) rigidly connected in the lower part (3) and having a substantially countersunk head (A2) adapted to be positioned in said hole.

7. A method for the manufacture of a horseshoe (1) according to any of the preceding claims, comprising the steps of:
cutting or punching the upper part (2) and the lower part (3) from sheet material, preferably steel sheet;
arranging said upper and lower parts to extend substantially parallel to each other with an interspace therebetween;
embedding resilient material for constituting said resilient intermediate layer (4) directly into the interspace between the upper part (2) and the lower part (3) and
interconnecting the upper and lower parts by arranging interlocking means (A; A1, A2) near at least one of the rear edges of the branches of the lower part (3) to prevent separation of the upper and lower parts, while allowing elastic deformation of the resilient intermediate layer (4),
**characterized by** providing at least one hole in the upper part (2) at a position which corresponds to a position near the rear edges (8) of the branches of the lower part (3);
arranging said interlocking means (A; A1, A2) in this hole with an upper surface of the interlocking means (A; A1, A2) retracted from an upper surface of the upper part (2) to provide a volume (v) between said upper surfaces;
embedding said resilient material to fill out said volume (v); and
connecting said interlocking means (A: A1; A2) loosely with the upper part (2) and rigidly with the lower part (3).

## Revendications

1. Fer à cheval (1) avec une couche élastique intermédiaire (4) arrangée pour remplir entièrement l'intervalle entre une partie supérieure rigide (2) présentant une surface supérieure pour appui contre le côté inférieur du sabot du cheval et une partie inférieure rigide (3) s'étendant au moins au-dessous d'une portion de la partie supérieure (2), la partie supérieure (2) et la partie inférieure (3) étant en liaison mécanique l'une avec l'autre au bord frontal du fer à cheval, un moyen d'engrenage (A; A1, A2) étant pourvu près d'au moins l'un des arrière-bords des branches de la partie inférieure (3) pour interconnexion de la partie inférieure (3) et de la partie supérieure (2) afin d'empêcher une séparation des parties supérieures et inférieures, en permettant une déformation élastique de la couche élastique intermédiaire (4), **caractérisé en ce que** ledit moyen d'engrenage (A; A1; A2) est relié lâchement à la partie supérieure (2) et relié rigidement à la partie inférieure (3), une surface supérieure dudit moyen d'engrenage (A; A1, A2) étant retirée de ladite surface supérieure de la partie supérieure (2) pour fournir un volume (v) entre lesdites surfaces supérieures avec la partie supérieure positionnée dans ledit appui contre le sabot.

2. Fer à cheval (1) selon la revendication 1, **caractérisé en ce que** ledit moyen d'engrenage (A; A1, A2) s'étend à travers un trou créé dans la partie supérieure (2).

3. Fer à cheval (1) selon la revendication 1 ou 2, **caractérisé en ce que** ledit volume (v) est rempli de matériau élastique.

4. Fer à cheval (1) selon la revendication 3, **caractérisé en ce que** le matériau élastique est le même que celui constituant la couche élastique intermédiaire (4).

5. Fer à cheval (1) selon l'une quelconque des revendications précédentes, **caractérisé en ce que** la couche élastique intermédiaire (4) est constituée d'une matière plastique élastique et moulée, préférablement le polyuréthanne.

6. Fer à cheval (1) selon la revendication 2, **caractérisé en ce que** le moyen d'engrenage (A) comprend un élément semblant à un rivet ou à une vis (A1) rigidement relié dans la partie inférieure (3) et présentant une tête essentiellement fraisée (A2) adaptée à être arrangée dans ledit trou.

7. Procédé de production d'un fer à cheval (1) selon l'une quelconque des revendications précédentes, comprenant les étapes de:
découpage ou estampage de la partie supérieure (2) et de la partie inférieure (3) de matériau de plaques, préférablement de plaque d'acier;
disposition desdites parties supérieures et inférieures à s'étendre essentiellement parallèlement l'une à l'autre avec une intervalle entre les deux;
insertion de matériau élastique pour constituer ladite couche élastique intermédiaire (4) directement dans l'intervalle entre la partie supérieure (2) et la partie supérieure (3) et
interconnexion des parties supérieures et inférieures par arrangement du moyen d'engrenage (A; A1, A2) près d'au moins l'un des arrière-bords des branches de la partie inférieure (3) pour empêcher une séparation des parties supérieures et inférieures, en permettant une déformation élastique de la couche élastique intermédiaire (4),
**caractérisé** en créant au moins un trou dans la partie supérieure (2) à une position correspondant à une position près des arrière-bords (8) des branches de la partie inférieure (3);
disposant ledit moyen d'engrenage (A; A1, A2) dans ce trou avec une surface supérieure du moyen d'engrenage (A; A1, A2) retirée d'une surface supérieure de la partie supérieure (2) pour créer un volume (v) entre lesdites surfaces supérieures;
insérant ledit matériau élastique pour remplir ledit volume (v); et
reliant ledit moyen d'engrenage (A; A1, A2) lâchement à la partie supérieure (2) et rigidement à la partie supérieure (3).

## Patentansprüche

1. Hufschuh (1) mit einer elastischen Zwischenschicht (4), die zur lückenlosen Ausfüllung des Zwischenraums zwischen einem starren oberen Teil (2) mit einer oberen Oberfläche zur Anlage an der unteren Seite des Pferdehufes und einem sich mindestens unter einen Teil des oberen Teils (2) erstreckenden starren unteren Teil (3) positioniert ist, wobei das obere Teil (2) und das untere Teil (3) am vorderen Rand des Hufschuhs miteinander in mechanischer Verbindung stehen, wobei ein Verschlussmittel (A; A1, A2) nahe an mindestens einem der hinteren Ränder der Abzweigungen des unteren Teils (3) zur gegenseitigen Verbindung des unteren Teils (3) und des oberen Teils (2) zur Hinderung einer Trennung des oberen und unteren Teils vorgesehen ist, während es eine elastische Verformung der elastischen Zwischenschicht (4) ermöglicht, **dadurch gekennzeichnet, dass** das Verschlussmittel (A: A1; A2) mit dem oberen Teil (2) lösbar und mit dem unteren Teil (3) fest verbunden ist, wobei eine obere Oberfläche des Verschlussmittels (A; A1, A2) von der oberen Oberfläche des oberen Teils (2) zurückgezogen ist, um bei Unterbringung des oberen Teils in Angrenzung zum Huf ein Volumen (v) zwischen den oberen Oberflächen bereitzustellen.

2. Hufschuh (1) nach Anspruch 1, **dadurch gekennzeichnet, dass** das Verschlussmittel (A; A1, A2) sich durch ein im oberen Teil (2) ausgebildetes Loch hindurch erstreckt.

3. Hufschuh (1) nach den Ansprüchen 1 oder 2, **dadurch gekennzeichnet, dass** das genannte Volumen (v) mit elastischem Werkstoff ausgefüllt ist.

4. Hufschuh (1) nach Anspruch 3, **dadurch gekennzeichnet, dass** das elastische Werkstoff dem die elastische Zwischenschicht (4) bildenden Werkstoff gleicht.

5. Hufschuh (1) nach einem der vorhergehenden Ansprüche, **dadurch gekennzeichnet, dass** die elastische Zwischenschicht (4) aus einem geformten, elastischen Kunststoff, vorzugsweise Polyurethan, besteht.

6. Hufschuh (1) nach Anspruch 2, **dadurch gekennzeichnet, dass** das Verschlussmittel (A) ein im unteren Teil (3) fest verbundenes niet- oder schraubenartiges Element (A1) umfasst, das einen zur Positionierung im genannten Loch angepassten, im Wesentlichen gesenkten Kopf (A2) aufweist.

7. Verfahren zur Herstellung eines Hufschuhs (1) nach einem der vorhergehenden Ansprüche, umfassend die folgenden Verfahrensschritte:
Ausschneiden oder Stanzen des oberen Teils (2) und des unteren Teils (3) aus dem Blechmaterial, vorzugsweise Stahlblech;
Anordnung des oberen und unteren Teils derart, dass sie sich mit einem dazwischen befindlichen Zwischenraum im Wesentlichen parallel zueinander erstrecken;
Einbettung elastischen Werkstoffs zur Bildung der genannten elastischen Zwischenschicht (4) direkt in den Zwischenraum zwischen dem oberen Teil (2) und dem unteren Teil (3) und
gegenseitige Verbindung des oberen und unteren Teils durch die Anordnung von einem Verschlussmittel (A; A1, A2) nahe an mindestens einem der hinteren Ränder der Abzweigungen des unteren Teils (3) zur Hinderung einer Trennung des oberen und des unteren Teils, während es eine elastische Verformung der elastischen Zwischenschicht (4) ermöglicht,
**gekennzeichnet durch** die Bereitstellung mindestens eines Lochs im oberen Teil (2) in einer Position, die einer Position nahe den hinteren Rändern (8) der Abzweigungen des unteren Teils (3) entspricht;
Anordnung des Verschlussmittels (A; A1, A2) in diesem Loch mit einer von einer oberen Oberfläche des oberen Teils (2) zurückgezogenen oberen Oberfläche des Verschlussmittels (A; A1, A2) zur Gewährleistung eines Volumens (v) zwischen den genannten oberen Oberflächen;
Einbettung des elastischen Werkstoffs zum Ausfüllen des Volumens (v); und
eine mit dem oberen Teil (2) lösbare und eine mit dem unteren Teil (3) feste Verbindung des Verschlussmittels (A: A1; A2).
